# EUROPEAN PATENT APPLICATION

(11) **EP 4 818 354 A1**
(43) Date of publication of application: **07.10.2026**
(21) Application number: 24898268.8
(22) Date of filing: 15.04.2024
(51) Int. Cl.: C22C 38/58, C22C 38/44, C22C 38/42, C22C 38/50, C22C 38/48, C22C 38/46, C22C 38/54, C21D 8/02, C21D 9/46, C23C 2/06

(54) **ULTRA-HIGH STRENGTH COLD-ROLLED STEEL SHEET HAVING EXCELLENT HYDROGEN EMBRITTLEMENT RESISTANCE AND MANUFACTURING METHOD THEREFOR**

(30) Priority: 01.12.2023 KR 20230172566
(71) Applicant: Hyundai Steel Company, Incheon 22525 (KR)
(72) Inventor: PARK, Bong June, Incheon 22525 (KR); JANG, Min Ho, Incheon 22525 (KR); HAN, Seong Kyung, Incheon 22525 (KR)
(74) Representative: Viering, Jentschura & Partner mbB Patent- und Rechtsanwälte
(86) International application number: PCT/KR2024/095728
(87) International publication number: WO 2025/116676

(57) **Abstract**

The present invention provides an ultra-high-strength cold-rolled steel sheet having a tensile strength of at least 1100 MPa and excellent hydrogen embrittlement resistance, and a method of manufacturing the same. According to an embodiment of the present invention, the ultra-high-strength cold-rolled steel sheet having excellent hydrogen embrittlement resistance comprises, in weight percent, carbon (C): 0.1% to 0.5%, silicon (Si): 0.01% to 2.0%, manganese (Mn): 0.1% to 5.0%, aluminum (Al): 0.01% to 2.0%, chromium (Cr): greater than 0% and 3.0% or less, molybdenum (Mo): greater than 0% and 1.0% or less, nickel (Ni): greater than 0% and 0.4% or less, copper (Cu): 0.05% to 0.4%, titanium (Ti): 0.01% to 0.2%, niobium (Nb): 0.01% to 0.1%, vanadium (V): 0.01% to 1.0%, boron (B): 0.001% to 0.005%, phosphorus (P): greater than 0% and 0.02% or less, sulfur (S): greater than 0% and 0.01% or less, and the balance being iron (Fe) and unavoidable impurities, wherein the steel sheet has a hot-dip galvanized coating layer or a galvannealed coating layer disposed on a surface thereof, and wherein the steel sheet has a tensile strength (TS) of at least 1100 MPa, an elongation (EL) of at least 3%, and a non-fracture time of at least 100 hours based on the hydrogen embrittlement test method.

## Description

### TECHNICAL FIELD

The technical concept of the present invention relates to a steel material, and more particularly, to an ultra-high-strength cold-rolled steel sheet having excellent corrosion resistance or resistance to hydrogen embrittlement, and a method of manufacturing the same.

### BACKGROUND ART

In the automotive industry, demands for crash safety of vehicle bodies have continuously increased. As the proliferation of electric vehicles has recently expanded, the number of automotive components has decreased; however, the weight of vehicles has increased due to the introduction of batteries, further expanding the demands for crash safety. Accordingly, the ultra-high-strengthening of crash members such as front bumper beams, side sills, and door impact beams that contribute to crash safety is also continuously progressing. In the case of martensitic steel, which has the highest strength among cold-rolled steel sheets, its application has expanded with the increasing use of roll forming techniques; however, delayed fracture issues arising from high strength exist. Corrosion in hydrogen-penetrating environments is known as a fracture behavior representative of such delayed fracture. Therefore, extensive research has been conducted to enhance corrosion resistance or resistance to hydrogen embrittlement for ultra-high-strength sheet materials with a tensile strength of 1 GPa or more, and accordingly, electrogalvanized steel sheets (EG: Electro Galvanized) having high corrosion resistance, produced by electrogalvanizing zinc onto cold-rolled steel sheets, have been studied; however, electrogalvanized steel sheets (EG) have the disadvantage of manufacturing costs being approximately 5 to 10 times higher compared to other coated materials.

Accordingly, hot-dip galvanized steel sheets (GA: Galvannealed) with further enhanced weldability and corrosion resistance for use in automotive component manufacturing have been developed.

As a prior art document, there is Korean Patent Application No. 2012-0144482.

### DETAILED DESCRIPTION OF THE INVENTION

### TECHNICAL PROBLEM

The technical problem to be achieved by the technical concept of the present invention is to provide an ultra-high-strength cold-rolled steel sheet having a tensile strength of 1100 MPa or more and excellent hydrogen embrittlement resistance, and a method of manufacturing the same, by limiting the contents of elements such as copper (Cu), manganese (Mn), chromium (Cr), silicon (Si), and nickel (Ni) that affect delayed fracture caused by hydrogen embrittlement.

However, such a problem is illustrative, and the technical concept of the present invention is not limited thereto.

### TECHNICAL SOLUTION

According to one aspect of the present invention, there is provided an ultra-high-strength cold-rolled steel sheet having a tensile strength of 1100 MPa or more and excellent hydrogen embrittlement resistance, and a method of manufacturing the same.

According to one embodiment of the present invention, the ultra-high-strength cold-rolled steel sheet having excellent hydrogen embrittlement resistance comprises, in weight percent, carbon (C): 0.1% to 0.5%, silicon (Si): 0.01% to 2.0%, manganese (Mn): 0.1% to 5.0%, aluminum (Al): 0.01% to 2.0%, chromium (Cr): greater than 0% and 3.0% or less, molybdenum (Mo): greater than 0% and 1.0% or less, nickel (Ni): greater than 0% and 0.4% or less, copper (Cu): 0.05% to 0.4%, titanium (Ti): 0.01% to 0.2%, niobium (Nb): 0.01% to 0.1%, vanadium (V): 0.01% to 1.0%, boron (B): 0.001% to 0.005%, phosphorus (P): greater than 0% and 0.02% or less, sulfur (S): greater than 0% and 0.01% or less, and the balance being iron (Fe) and unavoidable impurities, and comprises a hot-dip galvanized coating layer or a galvannealed coating layer on a surface thereof, wherein the steel sheet satisfies a tensile strength (TS) of 1100 MPa or more, an elongation (EL) of 3% or more, and a non-fracture time of 100 hours or more based on the hydrogen embrittlement test method.

In addition, in the ultra-high-strength cold-rolled steel sheet having excellent hydrogen embrittlement resistance, the sum of the weight percentages of silicon and nickel, [Si]+[Ni], and the sum of the weight percentages of manganese and chromium, [Mn]+[Cr], may satisfy the following relational expression: [Si]+[Ni] ≤ 0.85 - 0.23×([Mn]+[Cr]).

In addition, the microstructure of the ultra-high-strength cold-rolled steel sheet having excellent hydrogen embrittlement resistance comprises ferrite, tempered bainite, and tempered martensite phases, wherein the area fraction of the ferrite ranges from 0% to 20%, the area fraction of the tempered bainite ranges from 5% to 20%, and the area fraction of the tempered martensite ranges from 60% to 100%, provided that the sum of the tempered bainite and tempered martensite may satisfy a range of 80% to 100%.

In addition, the ultra-high-strength cold-rolled steel sheet having excellent hydrogen embrittlement resistance further comprises a carbide, wherein the carbide may have an average size of 100 nm or less and an aspect ratio of 5 or less.

In addition, the carbide may comprise at least one selected from the group consisting of Fe-based carbide, Ti-based carbide, Nb-based carbide, V-based carbide, and Mo-based carbide.

According to one embodiment of the present invention, the method of manufacturing the ultra-high-strength cold-rolled steel sheet having excellent hydrogen embrittlement resistance comprises: hot rolling a steel material comprising, in weight percent, carbon (C): 0.1% to 0.5%, silicon (Si): 0.01% to 2.0%, manganese (Mn): 0.1% to 5.0%, aluminum (Al): 0.01% to 2.0%, chromium (Cr): greater than 0% and 3.0% or less, molybdenum (Mo): greater than 0% and 1.0% or less, nickel (Ni): greater than 0% and 0.4% or less, copper (Cu): 0.05% to 0.4%, titanium (Ti): 0.01% to 0.2%, niobium (Nb): 0.01% to 0.1%, vanadium (V): 0.01% to 1.0%, boron (B): 0.001% to 0.005%, phosphorus (P): greater than 0% and 0.02% or less, sulfur (S): greater than 0% and 0.01% or less, and the balance being iron (Fe) and unavoidable impurities, to produce a hot-rolled steel sheet; cold rolling the hot-rolled steel sheet to produce a cold-rolled steel sheet; performing annealing heat treatment by maintaining the cold-rolled steel sheet at a temperature ranging from 800°C to 950°C for 60 seconds to 600 seconds; performing first cooling of the annealing heat-treated cold-rolled steel sheet at a cooling rate of 0°C/s to 50°C/s; performing heat treatment by maintaining the first-cooled cold-rolled steel sheet at a temperature ranging from 450°C to less than 600°C for 5 seconds to 100 seconds, and simultaneously performing hot-dip galvanizing; performing second cooling of the hot-dip galvanized cold-rolled steel sheet to a temperature ranging from 0°C to 350°C at a cooling rate of 1°C/s or more; and performing a tempering step of heat-treating the second-cooled cold-rolled steel sheet at a temperature ranging from 100°C to 350°C for 10 seconds or more.

In addition, the method may further comprise a step of performing alloying heat treatment on the hot-dip galvanized cold-rolled steel sheet.

In addition, the ultra-high-strength cold-rolled steel sheet having excellent hydrogen embrittlement resistance manufactured by the method of manufacturing the ultra-high-strength cold-rolled steel sheet having excellent hydrogen embrittlement resistance satisfies a tensile strength (TS) of 1100 MPa or more, an elongation (EL) of 3% or more, and a non-fracture time of 100 hours or more based on the hydrogen embrittlement test method, and the microstructure of the ultra-high-strength cold-rolled steel sheet having excellent hydrogen embrittlement resistance comprises ferrite, tempered bainite, and tempered martensite phases, wherein the area fraction of the ferrite ranges from 0% to 20%, the area fraction of the tempered bainite ranges from 5% to 20%, and the area fraction of the tempered martensite ranges from 60% to 100%, provided that the sum of the tempered bainite and tempered martensite may satisfy a range of 80% to 100%.

### ADVANTAGEOUS EFFECTS

According to the technical concept of the present invention, the hydrogen embrittlement resistance of the cold-rolled steel sheet can be improved by limiting the contents of components that affect the carbon activity under a certain relational expression.

The effects of the present invention described above are set forth by way of example, and the scope of the present invention is not limited by such effects.

### DESCRIPTION OF THE DRAWINGS

Fig. 1 is a graph showing the carbon activity of components constituting an ultra-high-strength cold-rolled steel sheet having excellent hydrogen embrittlement resistance according to an embodiment of the present invention.
Fig. 2 is a graph showing evaluation results after performing a hydrogen embrittlement test method on components constituting an ultra-high-strength cold-rolled steel sheet having excellent hydrogen embrittlement resistance according to an embodiment of the present invention.
Fig. 3 is a process flowchart schematically illustrating a method of manufacturing an ultra-high-strength cold-rolled steel sheet having excellent hydrogen embrittlement resistance according to an embodiment of the present invention.

### MODE OF THE INVENTION

Hereinafter, preferred embodiments of the present invention will be described in detail with reference to the accompanying drawings. The embodiments of the present invention are provided to more completely explain the technical concept of the present invention to those skilled in the art, and the following embodiments may be modified in various other forms, and the scope of the technical concept of the present invention is not limited to the following embodiments. Rather, these embodiments are provided to make the present disclosure more faithful and complete, and to fully convey the technical concept of the present invention to those skilled in the art. In the present specification, the same reference numerals denote the same elements throughout. Furthermore, various elements and regions in the drawings are schematically illustrated. Accordingly, the technical concept of the present invention is not limited by the relative sizes or spacings depicted in the accompanying drawings.

The following approaches have been proposed to improve the corrosion resistance or hydrogen embrittlement resistance of cold-rolled steel sheets. As a method of increasing hydrogen embrittlement resistance by controlling the residual hydrogen content remaining in the steel in relation to delayed fracture caused by hydrogen, a method of increasing hydrogen embrittlement resistance by controlling the hydrogen content to 0.1 ppm or less in a heat treatment maintained at 350 to 450°C during the heat treatment process after cold rolling has been proposed. In addition, a method of controlling the area fraction of ferrite, upper bainite, and martensite, adding boron as a grain boundary strengthening element, controlling the effective grain size of martensite, and simultaneously controlling the number of Fe-based carbides has been proposed. In addition, a method of increasing the hydrogen embrittlement resistance of steel sheets of 1100 MPa or higher grade by controlling the grain size and aspect ratio of ferrite and martensite based on the cold rolling reduction ratio has been proposed. Such hydrogen embrittlement has become an important research subject not only in cold-rolled steel sheets for automobiles but also in steels for pressure vessels. A method of forming a microstructure that reduces the fraction of banded structure in the microstructure based on the increase in hydrogen embrittlement resistance due to the addition of copper, thereby retarding the propagation rate of cracks caused by hydrogen embrittlement, has been proposed. In addition, a method of increasing hydrogen embrittlement resistance by adding nickel (Ni) in an amount of 1 wt% to 4 wt% has been proposed. A composition control method has been proposed that limits the content ratio of nickel and copper to Cu/Ni ≤ 0.6 in extra-thick steel materials for shipbuilding, offshore, construction, and civil engineering applications. A method of limiting the ratio of manganese, nickel, and copper to improve the stability of austenite during the manufacture of high-strength steel sheets has been proposed. In this case, nickel and copper were added for the purpose of securing hardenability in steel sheets with high aluminum addition, rather than for preventing delayed fracture caused by hydrogen.

The technical concept of the present invention is to provide an ultra-high-strength cold-rolled steel sheet having excellent hydrogen embrittlement resistance and a method of manufacturing the same, by controlling the alloy composition and microstructure configuration for application to ultra-high-strength steel sheets for automobiles having a tensile strength of 1100 MPa or more.

Hereinafter, the ultra-high-strength cold-rolled steel sheet having excellent hydrogen embrittlement resistance according to the technical concept of the present invention will be described in detail.

The ultra-high-strength cold-rolled steel sheet having excellent hydrogen embrittlement resistance according to one embodiment of the present invention comprises, in weight percent: carbon (C): 0.1% to 0.5%, silicon (Si): 0.01% to 2.0%, manganese (Mn): 0.1% to 5.0%, aluminum (Al): 0.01% to 2.0%, chromium (Cr): greater than 0% and 3.0% or less, molybdenum (Mo): greater than 0% and 1.0% or less, nickel (Ni): greater than 0% and 0.4% or less, copper (Cu): 0.05% to 0.4%, titanium (Ti): 0.01% to 0.2%, niobium (Nb): 0.01% to 0.1%, vanadium (V): 0.01% to 1.0%, boron (B): 0.001% to 0.005%, phosphorus (P): greater than 0% and 0.02% or less, sulfur (S): greater than 0% and 0.01% or less, and the balance being iron (Fe) and unavoidable impurities.

Hereinafter, the role of each component included in the ultra-high-strength cold-rolled steel sheet having excellent hydrogen embrittlement resistance according to the present invention and the content thereof will be described as follows. In this case, the content of each component element refers to weight percent based on the total weight of the steel sheet.

### Carbon (C): 0.1% to 0.5%

Carbon is added to secure the strength of the steel sheet and to control the microstructure, and strength can be secured through improvement of martensite hardness. When the carbon content is less than 0.1%, it is difficult to obtain the target strength. When the carbon content exceeds 0.5%, weldability and workability may deteriorate. Therefore, it is preferable to add carbon in an amount of 0.1% to 0.5% based on the total weight of the steel sheet.

### Silicon (Si): 0.01% to 2.0%

Silicon is a ferrite-stabilizing element and can suppress the growth of cementite to secure hydrogen embrittlement resistance. When the silicon content is less than 0.01%, the effect of silicon addition is insufficient. When the silicon content exceeds 2.0%, ferrite may be formed in large amounts, and the target strength may not be secured. Therefore, it is preferable to add silicon in an amount of 0.01% to 2.0% based on the total weight of the steel sheet.

### Manganese (Mn): 0.1% to 5.0%

Manganese has a solid solution strengthening effect and can contribute to strength improvement by increasing hardenability. When the manganese content is less than 0.1%, hardenability is insufficient, making it difficult to secure strength, and the effect of manganese addition is insufficient. When the manganese content exceeds 5.0%, the formation of manganese bands and manganese sulfide (MnS) may deteriorate hydrogen embrittlement resistance. Therefore, it is preferable to add manganese in an amount of 0.1% to 5.0% based on the total weight of the steel sheet.

### Aluminum (Al): 0.01% to 2.0%

Aluminum is used as a deoxidizer and can help purify ferrite. When the aluminum content is less than 0.01%, the effect of aluminum addition is insufficient, including an insufficient deoxidation effect. When the aluminum content exceeds 2.0%, aluminum nitride (AlN) may be formed during slab manufacturing, which may cause cracks during casting or hot rolling, and a large amount of ferrite may be formed, resulting in a decrease in strength. Therefore, it is preferable to add aluminum in an amount of 0.01% to 2.0% based on the total weight of the steel sheet.

### Chromium (Cr): greater than 0% and 3.0% or less

Chromium is a ferrite-stabilizing element in steel and is a component that improves hardenability, and can contribute to strength improvement by refining carbides. In addition, strength can be increased by solid solution strengthening. When the chromium content exceeds 3.0%, the manufacturing cost becomes relatively high, and the quenching effect during cooling is large, leading to an increase in strength and a consequent relative decrease in elongation, and laser weldability may deteriorate. Therefore, it is preferable to add chromium in an amount of greater than 0% and 3.0% or less based on the total weight of the steel sheet.

### Molybdenum (Mo): greater than 0% and 1.0% or less

Molybdenum has a solid solution strengthening effect and can contribute to strength improvement by increasing hardenability. In addition, hydrogen embrittlement resistance can be improved by refining Ti-based precipitates. When the molybdenum content exceeds 1.0%, the material cost may increase. Therefore, it is preferable to add molybdenum in an amount of greater than 0% and 1.0% or less based on the total weight of the steel sheet.

### Nickel (Ni): greater than 0% and 0.4% or less

Nickel is a precipitate-forming element that combines with carbon (C) and nitrogen (N) to form carbides or nitrides, and can improve the toughness and strength of steel through grain refinement resulting from the suppression of recrystallization and grain growth during rolling due to such precipitation. In addition, hot shortness caused by copper can be suppressed. When the nickel content is less than 0.02%, the effect of nickel addition is insufficient. When the nickel content exceeds 3.0%, the rolling load during rolling may increase significantly, and the manufacturing cost of the steel may increase. In particular, it is necessary to control the ratio with copper to prevent melting during the reheating process. Therefore, it is preferable to add nickel in an amount of greater than 0% and 0.4% or less based on the total weight of the steel sheet.

### Copper (Cu): 0.05% to 0.4%

Copper is a precipitate-forming element that combines with carbon (C) and nitrogen (N) to form carbides or nitrides, and can improve the toughness and strength of steel through grain refinement resulting from the suppression of recrystallization and grain growth during rolling due to such precipitation. In addition, copper can be added to increase hydrogen embrittlement resistance. When the copper content is less than 0.05%, the effect of copper addition is insufficient, and delayed fracture may occur. When the copper content exceeds 0.4%, as an element that causes hot shortness, cracks may occur during hot rolling, the rolling load during rolling may increase significantly, and the manufacturing cost of the steel may increase. Therefore, it is preferable to add copper in an amount of 0.05% to 0.4% based on the total weight of the steel sheet.

### Titanium (Ti): 0.01% to 0.2%

Titanium is a precipitate-forming element that can provide the effects of precipitation of titanium nitride (TiN) and titanium carbide (TiC) and grain refinement. In particular, the nitrogen content within the steel can be reduced through the precipitation of TiN, and when added together with boron, the precipitation of boron nitride (BN) can be prevented, thereby maintaining boron, which is a grain boundary strengthening element, in a solid solution state. When the titanium content is less than 0.01%, BN precipitation may be induced, and the effect of titanium addition is insufficient. When the titanium content exceeds 0.2%, hydrogen embrittlement resistance may deteriorate due to coarsening of TiN precipitates, it may be difficult to secure strength due to a reduction in the solid solubility of carbon in the base material, and the manufacturing cost of the steel may increase. Therefore, it is preferable to add titanium in an amount of 0.01% to 0.2% based on the total weight of the steel sheet.

### Niobium (Nb): 0.01% to 0.1%

Niobium is a precipitate-forming element that combines with carbon (C) and nitrogen (N) to form carbides or nitrides, and can improve the toughness and strength of steel through grain refinement resulting from the suppression of recrystallization and grain growth during rolling due to such precipitation. When the niobium content is less than 0.01%, there is no grain refinement effect, and the effect of niobium addition is insufficient. When the niobium content exceeds 0.1%, precipitates may grow and there may be no effect of increasing strength, the rolling load during rolling may increase significantly, and the manufacturing cost of the steel may increase. Therefore, it is preferable to add niobium in an amount of 0.01% to 0.1% based on the total weight of the steel sheet.

### Vanadium (V): 0.01% to 1.0%

Vanadium is a precipitate-forming element that combines with carbon (C) and nitrogen (N) to form carbides or nitrides, and can improve the toughness and strength of steel through grain refinement resulting from the suppression of recrystallization and grain growth during rolling due to such precipitation. When the vanadium content is less than 0.01%, there is no grain refinement effect, and the effect of vanadium addition is insufficient. When the vanadium content exceeds 1.0%, precipitates may grow and there may be no effect of increasing strength, the rolling load during rolling may increase significantly, and the manufacturing cost of the steel may increase. Therefore, it is preferable to add vanadium in an amount of 0.01% to 1.0% based on the total weight of the steel sheet.

### Boron (B): 0.001% to 0.005%

Boron is a grain boundary strengthening element and can increase hydrogen embrittlement resistance when distributed at grain boundaries. When the boron content is less than 0.001%, the effect of boron addition is insufficient. When the boron content exceeds 0.005%, there is a risk of grain boundary embrittlement due to the formation of boron nitride (BN). Therefore, it is preferable to add boron in an amount of 0.001% to 0.005% based on the total weight of the steel sheet.

### Phosphorus (P): greater than 0% and 0.02% or less

Phosphorus is an impurity included in the steel manufacturing process, and although it can help improve strength through solid solution strengthening, when contained in large amounts, low-temperature embrittlement may occur due to grain boundary segregation, and spot weldability may deteriorate. Therefore, it is preferable to limit the phosphorus content to greater than 0% and 0.02% or less based on the total weight of the steel sheet.

### Sulfur (S): greater than 0% and 0.01% or less

Sulfur is an impurity included in the steel manufacturing process, and can form non-metallic inclusions such as FeS and manganese sulfide (MnS), thereby deteriorating toughness, hydrogen embrittlement resistance, and weldability. Therefore, it is preferable to limit the sulfur content to greater than 0% and 0.01% or less based on the total weight of the steel sheet.

The remaining component of the ultra-high-strength cold-rolled steel sheet having excellent hydrogen embrittlement resistance is iron (Fe). However, in a typical steelmaking process, unintended impurities may inevitably be incorporated from raw materials or the surrounding environment, and thus cannot be excluded. Since these impurities are known to any person skilled in the art of the typical manufacturing process, all such details are not specifically mentioned in the present specification.

During all tempering processes after martensite formation begins, carbon undergoes segregation to dislocations or interfaces, clustering and transition carbide formation, and cementite precipitation. Therefore, carbon activity is a very important factor in the tempering process, and the factors affecting it include temperature and composition, and in particular, the hydrogen embrittlement resistance of the final cold-rolled steel sheet varies depending on the content of the components.

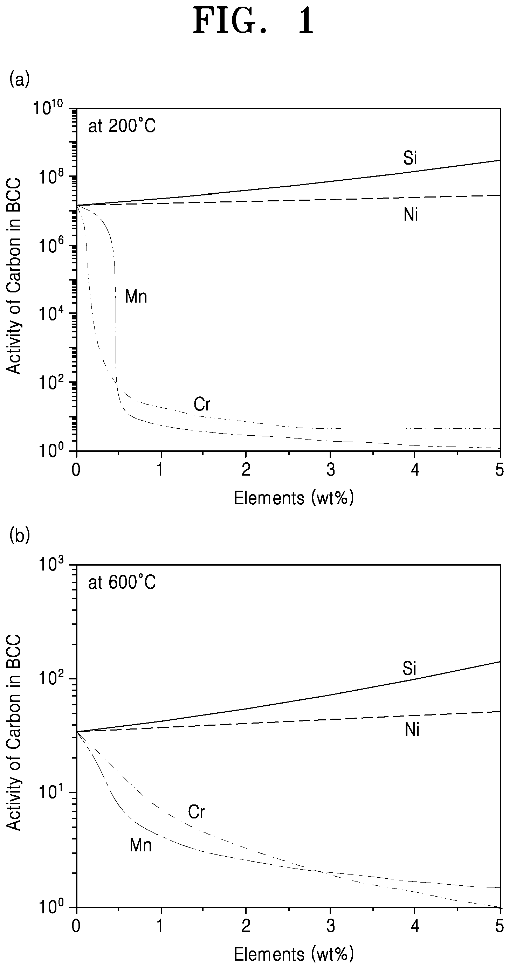

FIG. 1 is a graph showing the carbon activity of the components constituting the ultra-high-strength cold-rolled steel sheet having excellent hydrogen embrittlement resistance according to an embodiment of the present invention.

Referring to FIG. 1, among the elements that affect carbon activity, it can be confirmed that, for the representative elements Cr, Mn, Ni, and Si that remain in a solid solution state without precipitating, Cr and Mn decrease the carbon activity, while Ni and Si are elements that increase the carbon activity.

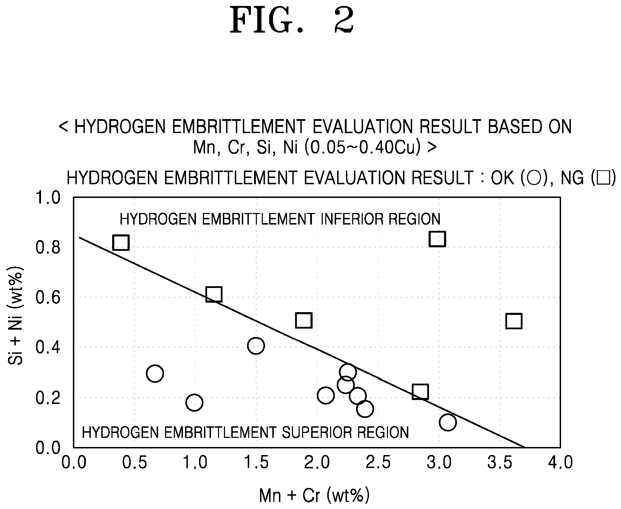

FIG. 2 is a graph showing the evaluation results after performing the hydrogen embrittlement test method on the components constituting the ultra-high-strength cold-rolled steel sheet having excellent hydrogen embrittlement resistance according to an embodiment of the present invention.

Hydrogen embrittlement was evaluated by the hydrogen embrittlement test method described below for conditions with a tensile strength of 1.1 GPa or more for test specimens at the end of the final heat treatment.

Referring to FIG. 2, under the assumption that the Cu content range is limited to 0.05 wt% or more and 0.40 wt% or less as described above, each axis was set according to the influence of elements on the carbon activity. The X-axis represents the sum of the weight percentages (wt%) of Mn and Cr, which decrease the carbon activity, and the Y-axis represents the sum of the weight percentages (wt%) of Si and Ni, which increase the carbon activity. As a result of the hydrogen embrittlement test method evaluation, it can be seen that a certain condition between the sum of the weight percentages of Mn and Cr and the sum of the weight percentages of Si and Ni is satisfied in terms of delayed fracture performance due to hydrogen embrittlement. According to an embodiment of the present invention, it can be confirmed that the delayed fracture performance due to hydrogen embrittlement can be defined by the following relational expression: [Si]+[Ni] ≤ 0.85 - 0.23×([Mn]+[Cr]). That is, the hydrogen embrittlement effect can be confirmed for (Mn+Cr) and (Si+Ni), which have similar effects on carbon activity.

The ultra-high-strength cold-rolled steel sheet having excellent hydrogen embrittlement resistance, manufactured by controlling the specific components of the alloy composition described above and their content ranges and through the manufacturing method described below, can satisfy, for example, a tensile strength (TS) of 1100 MPa or more, an elongation (EL) of 3% or more, and a non-fracture time of 100 hours or more based on the hydrogen embrittlement test method.

The microstructure of the ultra-high-strength cold-rolled steel sheet having excellent hydrogen embrittlement resistance may include ferrite, tempered bainite, and tempered martensite phases. The area fraction of the ferrite ranges from 0% to 20%, the area fraction of the tempered bainite ranges from 5% to 20%, and the area fraction of the tempered martensite ranges from 60% to 100%, wherein the sum of the tempered bainite and tempered martensite may satisfy a range of 80% to 100%. The area fraction refers to the area ratio derived by analyzing microstructure photographs through an image analyzer. In addition, the area fraction of the microstructure described above is based on the results of analysis at a point one-quarter of the thickness direction of the steel sheet using a scanning electron microscope (SEM) in a direction perpendicular to the rolling direction.

Carbides need to be present to suppress delayed fracture caused by hydrogen embrittlement. Such carbides can serve to trap and fix hydrogen that has diffused and penetrated into the steel sheet so that it cannot move freely within the steel sheet. However, if the size of the carbides is too large, embrittlement caused by hydrogen accumulated at the interface may occur, and therefore it is preferable that the size of the carbides be limited.

Therefore, the ultra-high-strength cold-rolled steel sheet having excellent hydrogen embrittlement resistance may further comprise carbides. The carbides may have an average size (particle diameter) of, for example, 100 nm or less, for example, in the range of 1 nm to 100 nm. The carbides may have an aspect ratio of, for example, 5 or less, for example, in the range of 1 to 5. Here, the aspect ratio refers to the ratio of the major axis length to the minor axis length of the carbide. When the average size of the carbides exceeds 100 nm, it can be considered that martensite has been excessively tempered or that retained austenite has been insufficiently stabilized.

The carbides may include both cementite and transition carbides, or may include carbides in which Fe is not present, and may include, for example, at least one of Fe-based carbide, Ti-based carbide, Nb-based carbide, V-based carbide, and Mo-based carbide. Specifically, the carbides may include, for example, at least one of Fe₃C, ε-carbide (Fe_{2.5}C), η-carbide (Fe₂C), (Fe, substitutional element) ₂₋₃(C), and (Ti, Nb, V, Mo)(C, N).

### Hydrogen Embrittlement Test Method

In the present invention, the hydrogen embrittlement test method for quantitatively measuring the delayed fracture due to hydrogen embrittlement of the ultra-high-strength cold-rolled steel sheet having excellent hydrogen embrittlement resistance is as follows.

A cold-rolled steel sheet is cut using shearing, laser, waterjet, milling, wire (EDM), or the like to prepare specimens having a length of 100 mm to 300 mm and a width of 10 mm to 50 mm. At this time, the longitudinal direction of the specimen is fabricated to be at 0 degrees or 90 degrees with respect to the rolling direction of the material.

Subsequently, stresses of 60%, 70%, 80%, 90%, and 100% of the yield strength are applied to the specimen using a 2-point or 4-point bending method. At this time, the applied stress must be varied according to the yield strength of each cold-rolled steel sheet. Under the stress application conditions, fracture must not occur under three or more conditions, including the 100% stress condition specimen.

The stress-applied specimen is immersed in a hydrochloric acid (HCl) solution having a concentration of 0.01 N to 0.2 N, preferably a 0.1 N hydrochloric acid solution. Since hydrogen is injected into the interior of the specimen by such immersion, this can be referred to as an accelerated test for delayed fracture caused by hydrogen. The immersed test specimen is maintained for 100 hours or more. At this time, fracture must not occur under even one of the above stress conditions.

Hereinafter, a method of manufacturing the ultra-high-strength cold-rolled steel sheet having excellent hydrogen embrittlement resistance according to the present invention will be described with reference to the accompanying drawings.

### Method of Manufacturing Ultra-High-Strength Cold-Rolled Steel Sheet Having Excellent Hydrogen Embrittlement Resistance

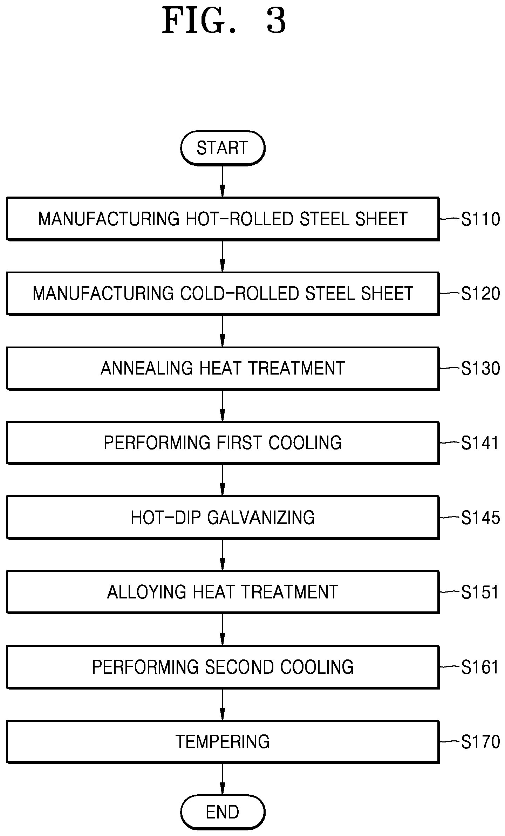

FIG. 3 is a process flowchart schematically illustrating a method of manufacturing an ultra-high-strength cold-rolled steel sheet having excellent hydrogen embrittlement resistance according to an embodiment of the present invention.

Referring to FIG. 3, the method of manufacturing an ultra-high-strength cold-rolled steel sheet having excellent hydrogen embrittlement resistance according to an embodiment of the present invention comprises a hot-rolled steel sheet manufacturing step (S110), a cold-rolled steel sheet manufacturing step (S120), an annealing heat treatment step (S130), a first cooling step (S141), a hot-dip galvanizing step (S145), an alloying step (S151), a second cooling step (S161), and a tempering step (S170).

### Hot-Rolled Steel Sheet Manufacturing Step (S110)

In the hot-rolled steel sheet manufacturing step (S110), a steel material is prepared comprising, in weight percent: carbon (C): 0.1% to 0.5%, silicon (Si): 0.01% to 2.0%, manganese (Mn): 0.1% to 5.0%, aluminum (Al): 0.01% to 2.0%, chromium (Cr): greater than 0% and 3.0% or less, molybdenum (Mo): greater than 0% and 1.0% or less, nickel (Ni): greater than 0% and 0.4% or less, copper (Cu): 0.05% to 0.4%, titanium (Ti): 0.01% to 0.2%, niobium (Nb): 0.01% to 0.1%, vanadium (V): 0.01% to 1.0%, boron (B): 0.001% to 0.005%, phosphorus (P): greater than 0% and 0.02% or less, sulfur (S): greater than 0% and 0.01% or less, and the balance being iron (Fe) and unavoidable impurities.

In the manufacturing method according to the present invention, the semi-finished product subject to the hot rolling process may be, for example, a slab. A slab in a semi-finished state can be obtained by obtaining molten steel of a predetermined composition through a steelmaking process and then through a continuous casting process.

The steel material, for example a slab, is reheated at a slab reheating temperature (SRT) of 1,150°C to 1,300°C for 1 hour to 5 hours. Through such reheating, a complete single-phase austenite transformation occurs, and re-dissolution of segregated components during casting and re-dissolution of precipitates may occur, thereby homogenizing the steel material and making it ready for hot rolling. When the reheating temperature is less than 1,150°C, the components segregated during casting may not be sufficiently re-dissolved and may not be uniformly distributed. When the reheating temperature exceeds 1,300°C, austenite grains may coarsen, which may cause a decrease in yield strength. In addition, as the reheating temperature increases, there are problems of increased manufacturing costs and decreased productivity due to increased heating costs and additional time required to adjust the hot rolling temperature. When the reheating time is less than 1 hour, the reduction of segregation bands may be insufficient, and when it exceeds 5 hours, the grain size increases and process costs may increase.

The reason for limiting the reheating temperature range is described as follows.

The melting point of copper is 1084.6°C, which is lower than that of iron. When copper is present in the slab, it can migrate to the surface. If the surface temperature of the slab or bar is higher than the melting point of copper, the copper that has migrated to the surface may melt and penetrate along the grain boundaries of the steel material, causing hot shortness, which results in a decrease in ductility and cracking. One method to prevent such hot shortness is to add nickel to form a complete solid solution of copper and nickel, thereby suppressing the melting of copper. Therefore, the temperature of the Cu-Ni solid solution must be at least 1,150°C or higher to prevent liquid copper from penetrating into the steel sheet during reheating. In addition, to suppress the cost increase due to nickel addition, the upper limit of the melting point of the Cu-Ni solid solution was set to 1,300°C or less. The melting point of the Cu-Ni solid solution can be calculated using the ThermoCalc program.

Subsequently, the reheated steel material is first subjected to hot rolling after heating to adjust its shape. The hot rolling may be performed continuously by width rolling, rough rolling, and finish rolling. By the hot rolling step, the steel material can form a hot-rolled steel material. The hot-rolled steel material may be a hot-rolled steel sheet.

The rough rolling is a step of rolling the slab to produce a bar, and may be performed in the range from the reheating end temperature (1,150°C to 1,300°C) to 1,000°C.

The finish rolling may be completed at a finish rolling temperature (FRT) of 800°C to 1,000°C. When the finish rolling temperature is less than 800°C, the rolling load may increase sharply, resulting in decreased productivity. When the finish rolling temperature exceeds 1,000°C, grains may coarsen, resulting in a decrease in the strength of the final steel material.

Subsequently, the hot-rolled steel material is cooled to a predetermined coiling temperature. The cooling may be either air cooling or water cooling, and may be performed at a cooling rate of, for example, 1°C/s to 100°C/s. A higher cooling rate may be advantageous for reducing the average grain size. The cooling is preferably performed to a coiling temperature ranging from, for example, 400°C to 700°C, for example, 500°C to 650°C.

Subsequently, the hot-rolled steel sheet is coiled at a coiling temperature (CT) of, for example, 300°C to 700°C, for example, 500°C to 650°C. When the coiling temperature is less than 300°C, the shape of the coiled hot-rolled coil may become non-uniform, and the strength may increase, resulting in an increase in rolling load during cold rolling. When the coiling temperature exceeds 700°C, a non-uniform microstructure may be generated due to the difference in cooling rate between the center and edge portions of the steel sheet, and defects may occur in subsequent processes due to surface oxidation and the like. The coiled steel material may be cooled to room temperature.

### Cold-Rolled Steel Sheet Manufacturing Step (S120)

The cold-rolled steel sheet manufacturing step (S120) is performed using the hot-rolled steel sheet to achieve the thickness of the final produced steel sheet. The coiled hot-rolled steel sheet is subjected to a pickling treatment for cleaning with acid. Subsequently, the pickled hot-rolled steel sheet is cold-rolled at a cold reduction ratio of, for example, 35% or more, for example, 35% to 70%, to form a cold-rolled steel sheet. A higher reduction ratio can increase hydrogen embrittlement resistance through the grain refinement effect. When the cold reduction ratio is less than 35%, it is difficult to obtain a uniform microstructure, and since the number of nucleation sites for recrystallization during annealing is small, grains may grow excessively during the annealing heat treatment described below, resulting in a sharp decrease in strength. When the cold reduction ratio exceeds 70%, the number of nucleation sites becomes excessively large, and the grains formed by the annealing heat treatment may be too fine, resulting in decreased ductility and deteriorated formability.

### Annealing Heat Treatment Step (S130)

In the annealing heat treatment step (S130), the cold-rolled steel sheet may be heat-treated in a continuous annealing furnace having a conventional slow cooling section.

The annealing heat treatment is performed by heating at a heating rate of, for example, 1°C/s or more, for example, 1°C/s to 10°C/s, to a temperature ranging from, for example, Ac3-50°C or higher, for example, 800°C to 950°C, and then maintaining for, for example, 10 seconds to 600 seconds. When the annealing heat treatment temperature is less than 800°C or the holding time is less than 10 seconds, it is difficult to form sufficient austenite, and the ferrite fraction may increase, resulting in a decrease in strength. When the annealing heat treatment temperature exceeds 950°C or the holding time exceeds 600 seconds, the size of austenite grains may coarsen or productivity may decrease excessively.

The Ac3 temperature can be calculated by the following formula.$Ac 3 = 910 - 203 \times {\left[C\right]}^{∧} 0.5 - 30 \left[Mn\right] + 44.7 \left[Si\right] + 31.5 \left[Mo\right] - 15.2 \left[Ni\right]$
where [C] is the carbon content (wt%) in the steel material, [Mn] is the manganese content (wt%) in the steel material, [Si] is the silicon content (wt%) in the steel material, [Mo] is the molybdenum content (wt%) in the steel material, and [Ni] is the nickel content (wt%) in the steel material.

### First Cooling Step (S141)

In the first cooling step (S141), the annealing heat-treated steel sheet may be cooled at a cooling rate of, for example, 0°C/s to 50°C/s.

### Hot-Dip Galvanizing Step (S145)

Thereafter, a heat treatment is performed by maintaining at a temperature ranging from, for example, 450°C to less than 600°C, for example, for 5 seconds to 100 seconds. At this time, simultaneously with the heat treatment, a hot-dip galvanizing step (S145) is performed in which the cold-rolled steel sheet is immersed in a hot-dip galvanizing bath at the above-described temperature conditions, for example, at a temperature ranging from 450°C to less than 600°C, to form a hot-dip galvanized coating layer. The temperature of the galvanizing bath may vary depending on the type and ratio of alloying elements constituting the coating layer and the composition of the cold-rolled steel sheet, and may be, for example, 450°C to less than 600°C. That is, the cold-rolled steel sheet is heated to a temperature ranging from 450°C to less than 600°C and then immersed in the galvanizing bath and maintained for, for example, 5 seconds to 100 seconds. Under the galvanizing bath conditions, a hot-dip galvanized coating layer is easily formed on the surface of the cold-rolled steel sheet, and the adhesion of the coating layer can be excellent.

When the subsequent alloying step (S151) is not performed after the hot-dip galvanizing step (S145), the steel sheet that has completed plating and exited the galvanizing bath is immediately subjected to the second cooling step (S161) continuously under the same process conditions, and thus austenite is transformed to martensite in this step. Thereafter, the tempering step (S170) is performed, and since the tempering heat treatment step has already been described above, the description thereof is omitted here to avoid redundancy.

### Alloying Heat Treatment step (S151)

If necessary, an alloying heat treatment step (S151) of subjecting the cold-rolled steel sheet on which the hot-dip galvanized coating layer has been formed to an alloying heat treatment may be further performed. In order for the alloying heat treatment step (S151) to be performed, the steel sheet that has completed plating and exited the galvanizing bath is introduced into a heat treatment apparatus and subjected to an alloying heat treatment, whereby the hot-dip galvanized coating layer grows stably and the adhesion of the coating layer can be excellent.

### Second Cooling Step (S161)

In the second cooling step (S161), the cold-rolled steel sheet is subsequently subjected to second cooling at a cooling rate of, for example, 1°C/s or more, to a temperature, for example, in the range of room temperature (0°C to 40°C) to 350°C.

### Tempering Step (S170)

In the tempering step (S170), the second-cooled cold-rolled steel sheet is heated at a heating rate of 100°C/s or less and heat-treated at, for example, a temperature ranging from 100°C to 350°C for a holding time of, for example, 10 seconds or more.

By such tempering heat treatment, the formation and growth of transition carbides and the growth of cementite can proceed. The tempering heat treatment may be performed for a long time at a low temperature, for example, 200°C or less, but at a high temperature, for example, a temperature exceeding 200°C, the growth of cementite must be suppressed by maintaining for a relatively short time in order to control the decrease in hydrogen embrittlement resistance.

By performing the steps described above, the ultra-high-strength cold-rolled steel sheet having excellent hydrogen embrittlement resistance according to an embodiment of the present invention may be a hot-dip galvannealed steel sheet (GA: Galvannealed).

A hot-dip galvannealed steel sheet (GA: Galvannealed) is a product developed to improve weldability and achieve good paintability with simple pretreatment equipment, and is a galvannealed steel sheet having a coating layer in which zinc and iron are mixed through a special heat treatment.

Whereas conventional hot-dip galvanized steel sheets (GI: Galvanized Iron) and electrogalvanized steel sheets (EG: Electro Galvanized) develop cracks upon immersion due to the large amount of hydrogen that penetrates during the plating process, hot-dip galvannealed steel sheets (GA: Galvannealed) are characterized in that the amount of hydrogen that penetrates when the cold-rolled steel sheet is immersed in the hot-dip galvanizing bath to form the hot-dip galvanized coating layer during the plating process is remarkably low, and accordingly, cracks do not occur upon immersion.

Accordingly, the hot-dip galvannealed steel sheet (GA) has excellent coating adhesion, resulting in less coating delamination during bending and folding processes, and can have excellent corrosion resistance.

### Experimental Examples

Hereinafter, preferred experimental examples are presented to aid in understanding the present invention. However, the following experimental examples are only for the purpose of aiding in understanding the present invention, and the present invention is not limited by the following experimental examples. Content not described herein can be sufficiently technically inferred by those skilled in the art, and thus the description thereof will be omitted.

Steels having the compositions (unit: wt%) shown in Tables 1 and 2 below were prepared, and cold-rolled steel sheets according to Examples and Comparative Examples were prepared through predetermined hot rolling, cold rolling, and heat treatment processes. In Tables 1 and 2, the balance consists of iron (Fe) and impurities inevitably contained in the steelmaking process and the like. The unit of content of each component is weight percent. At this time, the Examples and Comparative Examples described in Tables 1 and 2 are all limited to steel grades in which Cu is added in a content of 0.05 to 0.40 wt%.

**[Table 1]**

| Classification | C | Si | Mn | Cr | Mo | Ni | Cu |
|---|---|---|---|---|---|---|---|
| Example 1 | 0.244 | 0.107 | 1.919 | 0.415 | 0.210 | 0.099 | 0.093 |
| Example 2 | 0.195 | 0.060 | 1.506 | 0.333 | 0.387 | 0.022 | 0.190 |
| Comparative Example 1 | 0.263 | 0.592 | 1.482 | 0.409 | 0.208 | 0.115 | 0.088 |
| Comparative Example 2 | 0.285 | 0.412 | 1.012 | 0.146 | 0.000 | 0.199 | 0.088 |

**[Table 2]**

| Classification | Ti | Nb | V | B | Si+Ni | Mn+ Cr | 0.85 - 0.23 X ([Mn] +[Cr]) | Relati onal Expre ssion Satisf ied |
|---|---|---|---|---|---|---|---|---|
| Example 1 | 0.038 | 0.001 | 0.001 | 0.0026 | 0.206 | 2.334 | 0.313 | OK |
| Example 2 | 0.031 | 0.022 | 0.000 | 0.0029 | 0.082 | 1.839 | 0.427 | OK |
| Comparative Example 1 | 0.031 | 0.021 | 0.010 | 0.0027 | 0.707 | 1.891 | 0.415 | NG |
| Comparative Example 2 | 0.027 | 0.030 | 0.000 | 0.0021 | 0.611 | 1.158 | 0.584 | NG |

Referring to Tables 1 and 2, the Examples satisfied the compositional ranges of the present invention and the relational expression [Si]+[Ni] ≤ 0.85 - 0.23×([Mn]+[Cr]). In contrast, the Comparative Examples differ in that they do not satisfy the relational expression between compositional components.

Table 3 shows the manufacturing process condition values for the ultra-high-strength cold-rolled steel sheets having excellent hydrogen embrittlement resistance of the Comparative Examples and Examples, and the results of measuring the fracture time based on the hydrogen embrittlement test method.

**[Table 3]**

| Classification | Annealing Heat Treatment Temperat ure (°C) | Second Cooling End Temperat ure (°C) | Temperin g Temperat ure (°C) | Temperin g Time (sec) | Fracture Time Based on Hydrogen Embrittlement Test Method (hr) [Applied Stress, MPa] |
|---|---|---|---|---|---|
| Example 1 | 840 | Room temperatu re | 150 | 43,200 | Non-fracture [100%] |
| Example 2 | 860 | 120 | 250 | 120 | Non-fracture [100%] |
| Comparative Example 1 | 860 | Room temperatu re | 180 | 21,600 | 72 [100%] |
| Comparative Example 2 | 860 | 150 | 250 | 120 | 72 [100%] |

In the manufacturing processes of the Examples and Comparative Examples, conditions other than those listed in Table 3, for example, the hot rolling and cold rolling process conditions, were all manufactured identically so as to satisfy the process conditions of the present invention.

Referring to Table 3, the Examples and Comparative Examples all satisfied the process conditions of the present invention with respect to the annealing heat treatment temperature, the second cooling end temperature, the tempering temperature, and the tempering time.

However, referring to Table 3, the Examples did not exhibit fracture under conditions in which a load of 300% of the yield strength was applied for 100 hours or more. Accordingly, it can be seen that the Examples exhibit excellent resistance to hydrogen embrittlement. In contrast, the Comparative Examples exhibited fracture in less than 100 hours under conditions in which a load of 60% to 100% of the yield strength was applied. This demonstrates that the Comparative Examples are susceptible to hydrogen embrittlement as a result of not satisfying the compositional ranges of the present invention and the relational expression [Si]+[Ni] ≤ 0.85 - 0.23×([Mn]+[Cr]).

When the tempering is performed at a relatively high temperature, the growth of carbides in the longitudinal direction becomes very active, and thus the yield strength and tensile strength of the steel material may decrease; furthermore, since the carbides may act as fracture initiation sites upon hydrogen penetration, the steel material may become susceptible to hydrogen embrittlement. In contrast, when the tempering is performed at a relatively low temperature, heat treatment control over the growth of the carbides is more readily achievable, thereby facilitating the securing of the desired strength and suppressing fracture due to hydrogen embrittlement.

It will be apparent to those skilled in the art to which the technical concept of the present invention pertains that the technical concept of the present invention described above is not limited to the foregoing embodiments and the accompanying drawings, and that various substitutions, modifications, and alterations are possible without departing from the technical concept of the present invention.

## Claims

1. An ultra-high-strength cold-rolled steel sheet having excellent hydrogen embrittlement resistance, comprising, in weight percent: from 0.1% to 0.5% of carbon (C); from 0.01% to 2.0% of silicon (Si); from 0.1% to 5.0% of manganese (Mn); from 0.01% to 2.0% of aluminum (Al); greater than 0% and 3.0% or less of chromium (Cr); greater than 0% and 1.0% or less of molybdenum (Mo); greater than 0% and 0.4% or less of nickel (Ni); from 0.05% to 0.4% of copper (Cu); from 0.01% to 0.2% of titanium (Ti); from 0.01% to 0.1% of niobium (Nb); from 0.01% to 1.0% of vanadium (V); from 0.001% to 0.005% of boron (B); greater than 0% and 0.02% or less of phosphorus (P); greater than 0% and 0.01% or less of sulfur (S); and the balance being iron (Fe) and unavoidable impurities,
wherein the cold-rolled steel sheet comprises a hot-dip galvanized coating layer or a galvannealed coating layer on a surface thereof; and
wherein the cold-rolled steel sheet has a tensile strength (TS) of at least 1100 MPa, an elongation (EL) of at least 3%, and a non-fracture time of at least 100 hours based on a hydrogen embrittlement test method.

2. The ultra-high-strength cold-rolled steel sheet of claim 1, wherein a sum [Si]+[Ni] of the weight percentages of the silicon and the nickel, and a sum [Mn]+[Cr] of the weight percentages of the manganese and the chromium satisfy the following relational expression: $\left[Si\right] + \left[Ni\right] \leq 0.85 - 0.23 \times \left(\left[Mn\right]+\left[Cr\right]\right)$

3. The ultra-high-strength cold-rolled steel sheet having excellent hydrogen embrittlement resistance of claim 1, wherein the microstructure of the ultra-high-strength cold-rolled steel sheet comprises ferrite, tempered bainite, and tempered martensite phases,
an area fraction of the ferrite ranges from 0% to 20%,
an area fraction of the tempered bainite ranges from 5% to 20%,
an area fraction of the tempered martensite ranges from 60% to 100%, and
a sum of the tempered bainite and the tempered martensite is from 80% to 100%.

4. The ultra-high-strength cold-rolled steel sheet of claim 1, wherein the cold-rolled steel sheet further comprises a carbide, and wherein the carbide has an average size of no greater than 100 nm and an aspect ratio of no greater than 5.

5. The ultra-high-strength cold-rolled steel sheet of claim 4, wherein the carbide comprises at least one selected from the group consisting of Fe-based carbide, Ti-based carbide, Nb-based carbide, V-based carbide, and Mo-based carbide.

6. A method of producing an ultra-high-strength cold-rolled steel sheet having excellent hydrogen embrittlement resistance, the method comprising:
hot rolling a steel material comprising, in weight percent, from 0.1% to 0.5% of carbon (C), from 0.01% to 2.0% of silicon (Si), from 0.1% to 5.0% of manganese (Mn), from 0.01% to 2.0% of aluminum (Al), greater than 0% and 3.0% or less of chromium (Cr), greater than 0% and 1.0% or less of molybdenum (Mo), greater than 0% and 0.4% or less of nickel (Ni), from 0.05% to 0.4% of copper (Cu), from 0.01% to 0.2% of titanium (Ti), from 0.01% to 0.1% of niobium (Nb), from 0.01% to 1.0% of vanadium (V), from 0.001% to 0.005% of boron (B), greater than 0% and 0.02% or less of phosphorus (P), greater than 0% and 0.01% or less of sulfur (S), and the balance being iron (Fe) and unavoidable impurities, to produce a hot-rolled steel sheet;
cold rolling the hot-rolled steel sheet to produce a cold-rolled steel sheet;
performing annealing heat treatment on the cold-rolled steel sheet by maintaining the cold-rolled steel sheet at a temperature ranging from 800°C to 950°C for from 60 seconds to 600 seconds;
first cooling the annealing heat treatment-treated cold-rolled steel sheet at a cooling rate of from 0°C/s to 50°C/s;
maintaining the first-cooled cold-rolled steel sheet at a temperature ranging from 450°C to less than 600°C for from 5 seconds to 100 seconds to perform heat treatment while simultaneously performing hot-dip galvanizing;
second cooling the hot-dip galvanized cold-rolled steel sheet to a temperature ranging from 0°C to 350°C at a cooling rate of at least 1°C/s; and
tempering the second-cooled cold-rolled steel sheet by performing heat treatment at a temperature ranging from 100°C to 350°C for at least 10 seconds.

7. The method of claim 6, further comprising:
performing alloying heat treatment on the hot-dip galvanized cold-rolled steel sheet.

8. The method of producing an ultra-high-strength cold-rolled steel sheet having excellent hydrogen embrittlement resistance of claim 6, wherein the ultra-high-strength cold-rolled steel sheet produced by the method has a tensile strength (TS) of at least 1100 MPa, an elongation (EL) of at least 3%, and a non-fracture time of at least 100 hours based on a hydrogen embrittlement test method, and the microstructure of the ultra-high-strength cold-rolled steel sheet comprises ferrite, tempered bainite, and tempered martensite phases,
wherein an area fraction of the ferrite ranges from 0% to 20%, an area fraction of the tempered bainite ranges from 5% to 20%, an area fraction of the tempered martensite ranges from 60% to 100%, and a sum of the tempered bainite and the tempered martensite is from 80% to 100%.
